# EUROPÄISCHE PATENTSCHRIFT

(11) **EP 3 197 655 B1**
(45) Veröffentlichungstag und Bekanntmachung des Hinweises auf die Patenterteilung: **26.08.2020**
(21) Anmeldenummer: 15812937.9
(22) Anmeldetag: 21.09.2015
(51) Int. Cl.: B29B 11/14, B29B 11/08, B29C 49/06, B29C 45/00, B29C 45/72, B29C 49/64, B29C 49/42

(54) **VERFAHREN UND VORRICHTUNG ZUR HERSTELLUNG EINER OPTIMIERTEN HALSKONTUR AN PREFORMEN**
METHOD AND DEVICE FOR THE PRODUCTION OF AN OPTIMIZED NECK CONTOUR ON PREFORMS
PROCÉDÉ ET DISPOSITIF POUR RÉALISER UN CONTOUR DE COL OPTIMISÉ SUR DES PRÉFORMES

(30) Priorität: 22.09.2014 DE 102014014144
(43) Veröffentlichungstag der Anmeldung: 02.08.2017
(73) Patentinhaber: Aktas, Mahir, 35330 Balcova Izmir (TR)
(72) Erfinder: Aktas, Mahir, 35330 Balcova Izmir (TR)
(74) Vertreter: Klickow & Wetzel PartGmbB
(86) Internationale Anmeldenummer: PCT/DE2015/000472
(87) Internationale Veröffentlichungsnummer: WO 2016/045654

(56) Entgegenhaltungen:
- EP-A1- 1 180 424
- EP-A2- 0 199 576
- WO-A1-97/13696
- US-A- 4 991 728
- US-A1- 2004 166 265
- US-A1- 2004 258 791
- US-A1- 2014 199 520
- DATABASE WPI Week 198411 Thomson Scientific, London, GB; AN 1984-064851 XP002754551, -& JP S58 209533 A (LION CORP) 6. Dezember 1983 (1983-12-06)
- DATABASE WPI Week 197928 Thomson Scientific, London, GB; AN 1979-51747B XP002754552, -& JP S54 69176 A (YOSHINO KOGYOSHO CO LTD) 2. Juni 1979 (1979-06-02)

## Beschreibung

Die vorliegende Erfindung betrifft ein Verfahren und eine Vorrichtung zur Herstellung von Preformen zur Ausformung einer vorteilhaften Halsgeometrie für den späteren Blasprozess.

Preformen sind spritzgegossene Rohlinge aus mindestens einem thermoplastischen Material, die in Blasmaschinen für die Herstellung von streckgeblasenen Kunststoffbehältern zum Einsatz kommen.

Für die gemäß dieser Erfindung beschriebene übliche Herstellung von Preformen wird Kunststoffrohmaterial plastifiziert und anschliessend mit hohem Druck in ein Ein- oder Mehrkavitäten-Formwerkzeug gepresst.

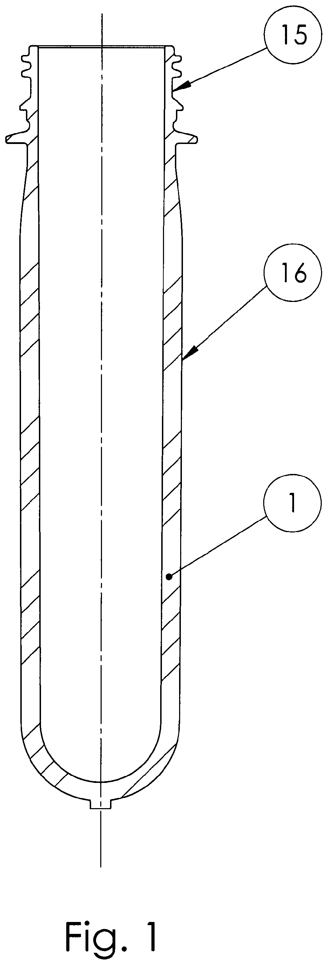

Es entstehen Preformen gemäss FIG.1, welche geometrisch im Wesentlichen aus einem Hals-und Schaftbereich und einer Bodenkuppe bestehen, sowie innen durch den Einsatz eines Kernes im Formwerkzeug hohl sind. Der Halsbereich ist derart geformt, dass er beispielsweise mit einer Schraubkappe wiederverschliessbar ausgestaltet sein kann. Der Halsbereich darf oberhalb des Transportringes während des Blasprozesses keine weitere Veränderung erfahren, da sonst die Gefahr besteht, dass das Verschlusssystem seine komplexen Fähigkeiten wie z.B. Dichtheit verlieren würde.

Der Bereich unterhalb des Transportringes, der sich anschliessende Schaftbereich und die Bodenkuppe werden dagegen bei erhöhten Temperaturen zu Hohlkörpern aufgeblasen, wodurch der Kunststoff verstreckt wird und sich dabei erheblich verfestigt. Daher sind die zu verformenden Preformbereiche geometrisch im Zusammenspiel mit der Kerngeometrie für die sich später einstellende Flaschenqualität verantwortlich.

Es ist anzumerken, dass das Temperaturprofil zwischen dem Hals und dem Schaft für ein optimales Ergebnis einen abrupten Temperatursprung von ca. 50 - 80°C machen müsste, was heute jedoch kaum zu realisieren ist. Das führt in den meisten Fällen dazu, das durch einen allmählichen Temperaturübergang das Material unter dem Transportring während des Streckblasprozesses nicht optimal in den Flaschenkörper abgezogen werden kann, was zu unnötigem Materialverbrauch führt.

Üblicherweise stellt das Formwerkzeug die höchste Investition in einem Produktionssystem dar. Deswegen wird hoher Wert darauf gelegt, dass es effizient betrieben wird. So wird der Preform, dessen Aussenhaut im direkten Kontakt mit dem intensiv gekühlten Formstahl steht, und folglich dort schnell erstarrt, schadensfrei und ohne mechanische Deformation entformt, damit das Formwerkzeug ohne Zeitverluste für den nächsten Produktionszyklus bereit ist.

Bei den üblichen schnellen Produktionszyklen verbleibt eine erhebliche Restwärme im Inneren der Preformwandung, die zu einer Rückerwärmung führt, wodurch der Preform wiedererweichen und auskristallisieren kann, was ihn unbrauchbar werden lässt.

Es ist daher unerlässlich, den Preform nach der Entformung weiterhin intensiv in einfacheren Formenteilen, in sogenannten Kühlhülsen, während mehrerer Produktionszyklen zu kühlen.

Der Preform, wie er in Fig. 1 dargestellt ist, entspricht dem heutigen Stand der Technik, bei dem es unausweichlich ist, dass die Wanddicken des Preforms besonders im Bereich der Bodenkuppe und des Schaftes ähnliche Wandstärken aufweisen. Friert das Material durch dünnere Wandstärken im Angussbereich oder im Halsbereich frühzeitig ein, kann das Schrumpfen in der Abkühlphase durch ein Nachdrücken der Schmelze, mit Wirkung auf den gesamten Preform einschliesslich dem Halsbereich, nicht vermieden werden, was in der Konsequenz zu ungewünschten Einfallstellen in kritischen Bereichen des Preforms, besonders im Halsbereich führt.

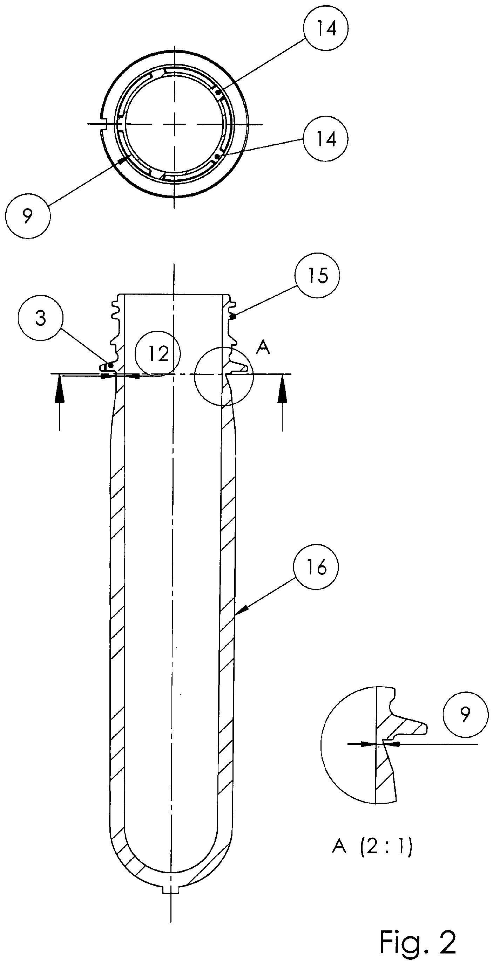

Die Preform-Geometrie, wie sie in Fig. 2 gezeigt ist und deren Vorteile nachfolgend erläutert werden, können daher nicht - oder nur unter Berücksichtigung entsprechender Massnahmen, welche den erforderliche Nachdruck aufrecht erhalten - im bekannten Spritzgiessverfahren hergestellt werden, da für diese Erfindung eine wesentlich dünnere Wandstärke im Bereich des Halses unterhalb des Transportrings gewünscht wird als im nachfolgenden Gewindebereich und somit durch ein verfrühtes Einfrieren dieses dünnen Bereiches Einfallstellen nicht mehr vermieden werden können.

Weiterer Stand der Technik: US2004166265A1, US2014199520A1 und EP0199576A2 entsprechen grundsätzlich den Oberbegriffen der unabhängigen Ansprüchen.

Die zentrale Aufgabe der hier vorliegenden Erfindung ist, ein Verfahren und eine Vorrichtung zu beschreiben, mit denen sich Preformen mit wesentlich günstigeren Konturen unterhalb des Tranportringes herstellen lassen. Der Vorteil liegt darin, dass die Infrarotheizungen der nachfolgenden Blasmaschinen über diese nun vergrösserte Oberfläche bei gleichzeitig verringerter Wandstärke effizienter Wärmeenergie einbringen können um den Kunststoff schnell auf eine verstreckfähige Temperatur zu bringen. Dadurch kann bei der Erhitzung des Preforms auf den Hals selbst mehr Rücksicht genommen werden, der nicht erhitzt werden darf - der Temperatursprung vom kalten Halsbereich zum heissen Preformkörper sollte möglichst abrupt sein. Dadurch kann während des Streckblasvorganges das Material direkt unterhalb des Transportringes optimal zu Gunsten des Flaschenkörpers herausgezogen werden, was Einsparungen an Rohmaterialien ermöglicht.

Zur Herstellung derartiger Preformen werden hier gesamthaft drei Lösungen vorgeschlagen, die entweder bereits im Formwerkzeug zur Anwendung kommen - oder später in der Nachkühlung. Von den drei Lösungen hört nur die erste Lösung zur vorliegenden Erfindung. Die vorliegende Erfindung wird durch den unabhängigen Ansprüchen definiert.

So ist es im ersten Ansatz im Bereich des Formwerkzeuges beispielsweise möglich, die Formgebung des Preforms derart zu gestalten, dass der grösste Teil im Übergang des Halses tatsächlich dünnwandig ist - jedoch mindestens zwei oder mehr Kanäle geschaffen werden, die nicht frühzeitig einfrieren und damit den Nachdruck zum Hals aufrecht erhalten. Diese Kanäle zeigen sich am fertigen Spritzling als Stege, die den späteren Blasvorgang nicht negativ beeinflussen - sofern diese möglichst symmetrisch am Umfang verteilt sind.

Ein alternativer zweiter Ansatz ist es mindestens zwei Schieber im Werkzeug zu implementieren, die möglichst am Ende der Nachdruckphase die dünne Kontur unter dem Transportring noch im Spritzgießwerkzeug realisieren. Durch einen gutgewählten Zeitpunkt würde der Verdrängungsprozess den Nachdruck sogar unterstützen. Auch bei dieser Lösung entstehen Stege, bedingt durch die Trennstellen der Schieber, Ihre Anzahl steht im direkten Zusammenhang mit der Anzahl der eingesetzten Schieber. Diese Stege können aber wesentlich dünner gestaltet werden, als die Stege, die für die reine Spritzgusslösung notwendig sind, da das Einfrieren der Schmelze in den Stegen dann keine Rolle mehr spielt.

Eine dritte Ansatz, den Preform gemäss dieser Offenbarung unter dem Halsbereich dünn auszuprägen kann in der Nachkühlung realisiert werden und basiert auf dem Fakt der Restwärme, was zum Wiedererweichen des Preforms führt. Bei dieser Lösung innerhalb der Nachkühlung, wo die aus dem Werkzeug entnommenen Preformen ohne weiteres Fortsetzen der Kühlung grundsätzlich rückerweichen, d.h. sich auf ein bestimmtes Temperaturniveau einstellen und dadurch wieder leichter verformbar werden, kann die gewünschte Kontur durch ein Prägen eingebracht werden. Während wie beim Stand der Technik beschrieben, der Preformschaft und die Preformkuppe durch Kontaktkühlung in der Kühlhülse abgekühlt wird, bleibt nun der Bereich zwischen Preformschaft und Transportring durch eine Modifikation der Kühlhülsenfunktion vom Kühlkontakt ausgeschlossen, wodurch sich an dieser Stelle eine Temperatur von ca. 90 - 130°C durch Rückerwärmung einstellen kann und diese damit wieder verformbar wird.

Im Gegensatz zum Stand der Technik, bei der der Preform grundsätzlich intensiv abgekühlt wird um einen allgemein möglichst verfestigten Preform zu erhalten, liegt der Basisgedanke dieses Erfindungsteils darin, dass durch die veränderte Funktion der Kühlhülse, die den direkten Kontakt zum Preformbereich unterhalb des Transportringes ausschliesst, dort eine intensive Kühlung entfällt und damit eine Rückerwärmung zulässt. Der Preformbereich unterhalb des Transportringes hat nach einer Konditionierzeit von wenigen Sekunden ein Temperaturniveau bei dem er am leichtesten verformbar ist.

Zur Verformung des Preformbereiches unterhalb des Transportringes kommen spezielle Prägeelemente zum Einsatz, welche die neue Kontur gezielt und reproduzierbar umformen.

Die aus solidem Material hergestellten Prägeelemente, beispielsweise aus Werkzeugstahl, sind so angeordnet, dass sie durch eine einfache axiale Bewegung hohe Prägekräfte aufbringen können. Unter Prägen wird verstanden, dass das plastische Material durch Ziehen, Drücken und Schieben derart verformt wird, wie es die Prägeelemente präzise vorgeben. Eine weitere Möglichkeit, den Prägevorgang im besagten Preformbereich in Bezug auf die Präzision zu beeinflussen ist die Möglichkeit, die Prägekörper aktiv zu temperieren.

Grundsätzlich ist der Prägevorgang so zu verstehen, dass die Prägeelemente den weichen Kunststoff auf einen harten Zylinder drücken, der die innere Deformation des Preforms ausschliesst. Der Kunststoff weicht daher nach oben und unten aus, wodurch der Preform sich unerheblich reproduzierbar längen kann, wenn die Bereiche oberhalb und unterhalb der Prägestelle axial frei beweglich sind. Auch dieses Verfahren weisst in direkter Abhängigkeit der Anzahl der Prägeteile leichte Stege auf, da diese geometrische Trennungen in der Kontur besitzen, die sich am Preformhals abbilden. Grundsätzlich hat das Prägeverfahren auf die Produktionszykluszeit keinen Einfluss, da die Zeit des Spritzgiessens im Formwerkzeug länger dauert als der Prägevorgang selbst.

Die vorliegende Offenbarung wird nachfolgend und mit Bezug auf die beigefügten Zeichnungen näher erläutert. Die Zeichnungen zeigen in
- Fig. 1: Preform im Querschnitt wie er üblicherweise nach dem Stand der Technik hergestellt wird
- Fig. 2: Preform im Querschnitt bei dem der Bereich unterhalb des Transportringes durch unterschiedliche Verfahren nach oder während des Spritzgießprozesses im Formwerkzeug oder in der Nachkühlstation gestaltet wurde und die Wandstärke dort dadurch nahezu beliebig verringert werden kann
- Fig. 3-6: Schematische Ansicht der Nachkühlungseinheit, in die die Prägeelemente integriert wurden und aus der ersichtlich ist, wie die Prägekräfte aufgebracht werden können.
- Fig. 7: Schematische Darstellung der Fließwege am aufgewickelten Preformneck von Aussen und von der Seite.
- Fig. 8a-8b: Verwendung von Schiebereinsätzen zur Herstellung von dünneren Wandstärken im Formwerkzeug nach oder während des Füllvorganges.

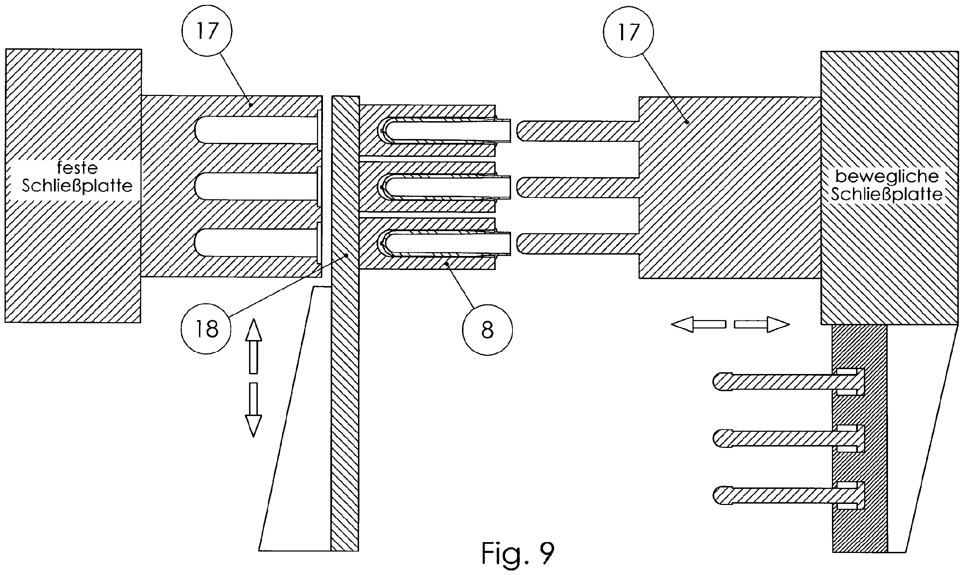

- Fig. 9: Draufsicht einer beispielhaften Produktionsanordnung für Preformen

Die Zeichnungen sollen im Folgenden die Erklärung des Herstellungsvorganges des Preformhalses unterstützen.

Figur 1 zeigt einen nach Stand der Technik hergestellten Preform. Dieser kann einen Transportring 3 für weitere Produktionsschritte der Gebindeherstellung aufweisen - es kann zukünftig aber auch möglich sein, dass auf diesen Transportring 3 verzichtet wird, da im Bereich zwischen den Stegen der Preform ggf. gegriffen werden kann. Dabei weist die Wandstärke im Bereich unterhalb des Transportringes 3 eine ähnliche Wandstärke 12 wie im Gewindebereich 15 auf. Für den Blasprozess optimierte Preformen FIG 2 mit verringerten Wandstärken 9 unterhalb des Transportringes 3 können auf Grund der Gefahr des Einfrierens der Schmelze nur mit Einschränkungen spritztechnisch realisiert werden, da dann der Nachdruck, welcher dem Schrumpfen des Preforms während des Abkühlprozesses entgegenwirkt, nicht mehr in den entscheidenden Bereichen wirken kann.

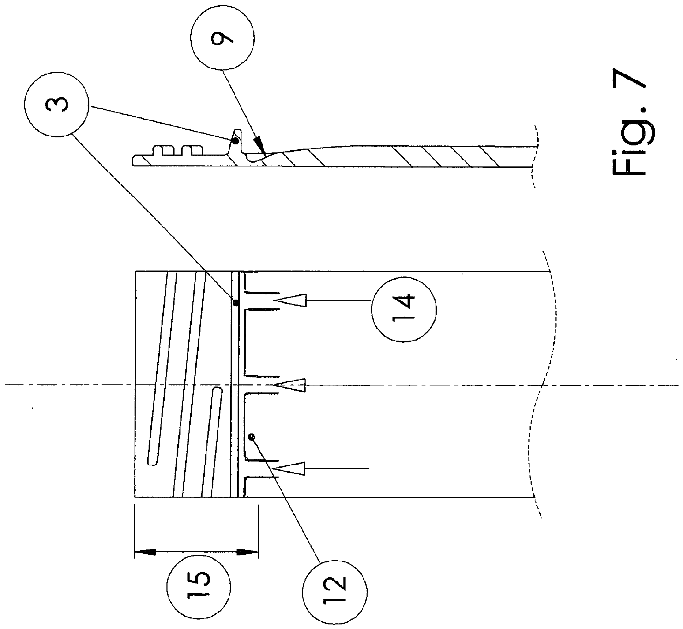

In dieser Offenbarung werden drei Lösungsansätze aufgezeigt, wie der Preform in FIG 2 hergestellt werden kann. Es ist dabei aber zu erwähnen, dass alle drei Verfahren mindestens zwei Stege bzw. Kanäle 14 am Umfang des beschriebenen Preformbereichs erzeugen, die aber keine nachteiligen Auswirkungen auf das gewünschte Ergebnis haben. Um mit der herkömmlichen Spritzgießtechnik dennoch einen wie in den FIG 2 gezeigten Preform produzieren zu können, wird das Formwerkzeug 17 derart gestaltet, dass über die dünne Wandung 9 unterhalb des Preformhalses 15 mindestens zwei, besser drei Kanäle 14 von ausreichender Breite wie in Fig 7 vorgesehen werden, die die Aufrechterhaltung des Nachdrucks im Halsbereich 15 gewährleistet.

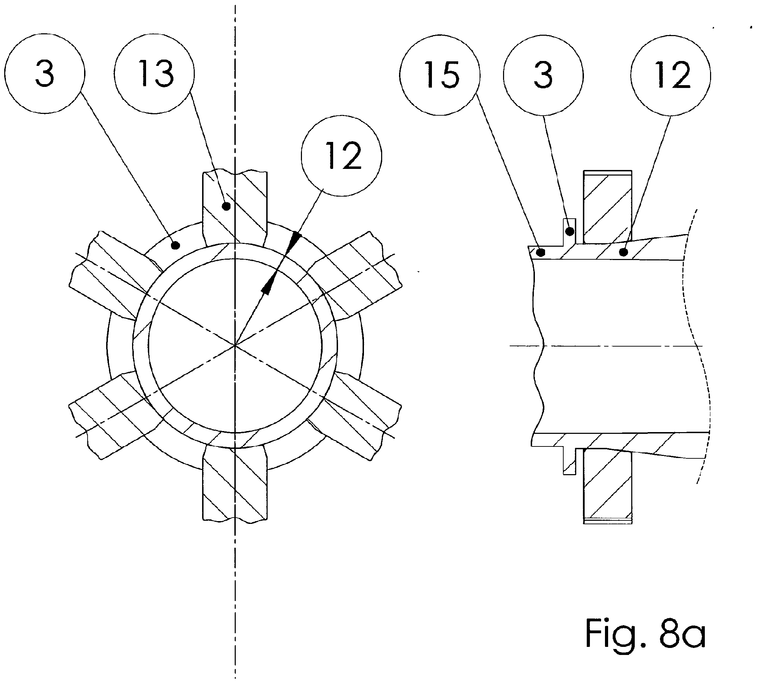

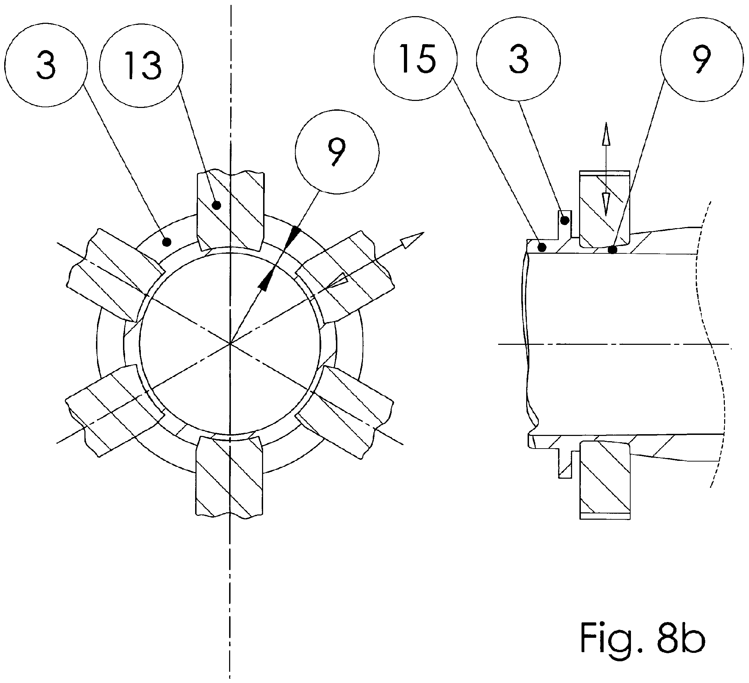

Um die Kanäle 14 schmaler zu gestalten, können aber auch mindestens zwei Schiebeelemente 13 im Formwerkzeug 17 integriert werden, wie in Fig 8a und Fig 8b dargestellt, die dann zum optimalen Zeitpunkt im Spritzgiessprozess zum Einsatz kommen. Diese drücken den noch weichen Kunststoff in der Form in für den Blasprozess weniger kritische Bereiche und unterstützen dabei ggf. die Nachdruckphase.

Schmalere Kanäle können aber auch nach dem Spritzgiessprozess erreicht werden in dem man sie nach dem ersten Abkühlen und dem Öffnen des Formwerkzeugs 17 in üblicher Weise mit einem Entnahmearm 18 entnimmt und diese Modifikation in die folgende Nachkühlung verlagert. Der Entnahmearm 18 weist dabei eine Vielzahl von Kühlhülsen 8 auf, in denen der Preform FIG. 1 bis zum Hals- oder Neckbereich 15 eingeführt wird.

Sowohl die Spritzgießmaschinen mit Formwerkzeug 17 wie auch der Entnahmearm 18 sind aus dem Stand der Technik hinlänglich bekannt.

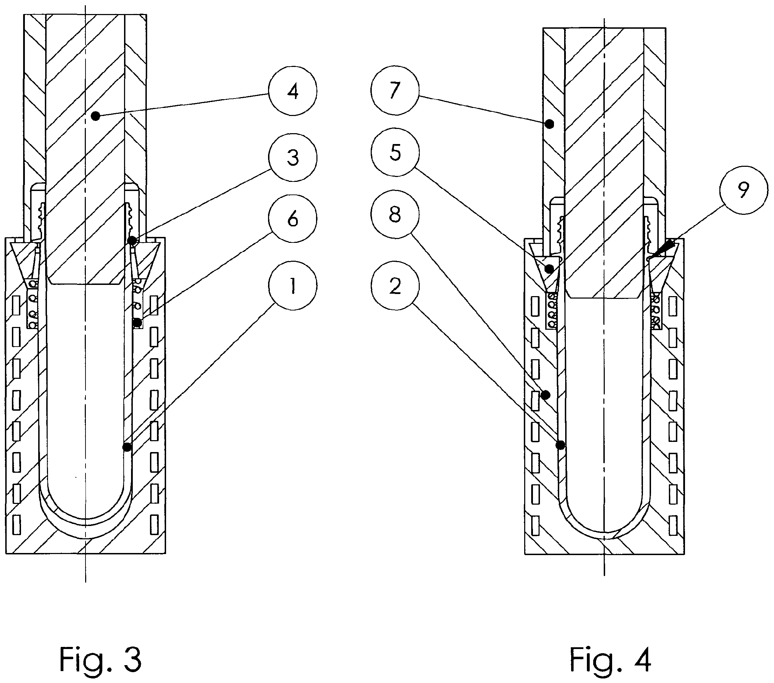

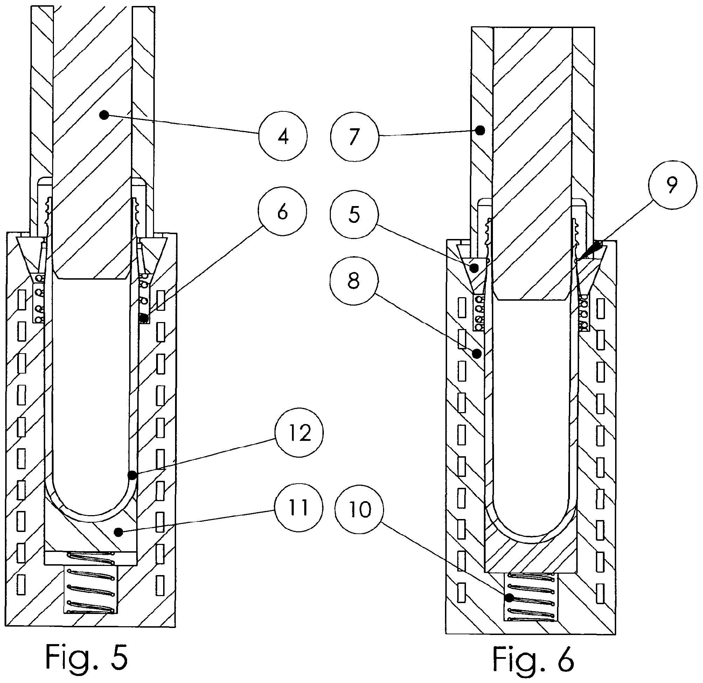

In Figur 3 bis 6 ist eine solche Kühlhülse 8 dargestellt. Der zunächst hergestellte Preform Fig. 1 weist eine herkömmliche Form mit einer relativ dicken Wandstärke im Bereich unterhalb des Transportringes 3 auf und ist in seinem äusseren Körperbereich bei fast vollständigem, direktem Kontakt in einer wassergekühlten Kühlhülse 8 aufgenommen. Auf diese vorliegende Kühlung, betrieben mit Flüssigkeiten oder Gasen, muss nicht näher eingegangen werden, da sie aus dem Stand der Technik in vielfältigen Ausführungsvarianten bekannt ist.

Die in Figur 3 dargestellten linken Preformpositionierung zeigt, dass die Kühlhülse 8 im oberen Bereich Prägeelemente 5 aufweist, die auf Federn 6 gelagert und durch Schrauben gesichert sind. Der Preform 1 liegt mit seinem Transportring 3 auf den Prägeelementen 5 auf und hat dadurch noch nicht seine axiale Endlage in der Kühlhülse 8 erreicht. Sollte der Preform keinen Transportring 3 aufweisen, dann kann der Preform 1 alternativ durch eine bewegliche, federgelagerte Bodenabstützung 11 an seiner Bodenkuppe in diese Position gebracht werden. Die Prägeelemente 5 liegen in dieser Position noch nicht formgebend am Preform 1 an, wodurch dieser Bereich sich wegen der fehlenden Kontaktkühlung rückerwärmen kann. Die Anzahl der Kühlhülsen 8 können zur Intensivierung der Preformkühlung ein Vielfaches der Anzahl der Kavitäten im Formwerkzeug 17 sein. Dadurch kann die Verweilzeit des Preforms 1 oder Preforms 2 in der Kühlphase über mehrere Spritzgiesszyklen andauern.

Um das Formwerkzeug 17 schnellstmöglich für den nächsten Spritzzyklus bereitzustellen, wird mit einem Entnahmearm 18 die Preformen aus dem Formenbereich entnommen. Dabei nimmt der Entnahmearm 18 eine Position ein, damit die Preformmündungen der zuletzt hergestellten Anzahl von Preformen 1 einer Transportplatte gegenüberstehen, auf die Stützbolzen 4 und Druckglocken 7 gleicher Anzahl wie Preformen montiert sind, axial fluchten lässt. Die Transportplatte kann wegen des nun folgenden hohen Kräftebedarfs der Einfachheit halber direkt an der beweglichen Schliessplatte montiert sein. Sie könnte aber auch eine eigenständig bewegliche Einheit sein.

Der Stützbolzen 4 ist im Wesentlichen dafür vorgesehen, dass beim Zusammenfahren des Entnahmegreifers 18 mit der Transportplatte der Preform 1 zentriert wird und beim folgenden Prägevorgang durch die Prägeelemente 5 eine Deformation des Preforminnendurchmessers weitestgehend vermieden wird. Der Prägevorgang selbst wird mit demselben Zusammenfahren des Entnahmegreifers 18 und der Transportplatte eingeleitet, bei dem durch die Druckglocke 7 die notwendige Kraft auf die Prägeelemente 5 eingeleitet werden. Die eigentlichen Prägekräfte entstehen durch die konische Lagerung der Prägeelemente 5, die sich dadurch um einen geometrisch vorbestimmten Hub zur Preformachse bewegen. Der Winkel und die Länge des Konus werden entsprechend dem Kraftbedarf zum Prägen gewählt,

Die Kraft und der Zeitpunkt für das eigentliche Prägen kann durch einen eigenen gesamthaften Antrieb der Transportplatte bestimmt werden. Ist die Transportplatte jedoch direkt mit der beweglichen Schliessplatte der Spritzgiessmaschine verbunden, ist die Verwendung von individuellen axialen Antrieben notwendig, wenn der Prägezeitpunkt zeitlich verzögert werden soll.

Die Preformen Fig. 1 sind während der Entnahme in der Innenkontur der Kühlhülsen 8 so gelagert, dass sie zwar noch einen weiteren, für das folgende Prägen notwendigen, in seiner Länge bestimmten axialen Hub machen können, diese aber von den Prägeelementen 5 daran gehindert werden, da die Transportringe 3 dort aufliegen. Weisen die Preformen keine Transportringe 3 auf, dann wird der Preform bevorzugt mit einer beweglichen, gefederten Bodenabstützungen 11 in dieser bestimmten Position gehalten. Dieser bestimmte axiale Resthub, wird vom Stützbolzen 4, der Druckglocke 7, dem Preform 1 sowie den Prägeelementen 5 gegen die Rückdruckfeder 6 für den Prägevorgang ausgeführt. Bei Preformen ohne Stützringe 3 wird zudem die Bodenabstützung 11 gegen die Druckfeder 10 bewegt. Der Prägehub wird idealerweise dann durchgeführt, wenn der Wärmehaushalt durch die Rückerwärmung an der Prägestelle 9 zum Prägen optimal ist.

Die Prägeelemente 5 können im formgebenden Bereich nahezu beliebig geformt und positioniert werden. Die Prägeelemente 5 können alle gleich gross sein oder verschiedene Grössen annehmen. Auch die Anzahl kann individuell von einem Element beliebig hoch gewählt werden. Ideal sind drei bis sechs gleichgrosse Prägeelemente 5, die jeweils axiale Stege 14 an der Prägestelle des Preforms 2 hinterlassen können. Bei gleichmässiger Verteilung dieser Stege 14, was durch gleichgrosse Prägeelemente 5 erreicht wird, erfährt der spätere Blasprozess keine Nachteile.

Ist der Prägevorgang abgeschlossen, kann das System entlastet werden, wodurch die Rückdruckfeder die Prägeelemente 5 und damit den Preform 2, die Druckglocke 7 und den Stützbolzen 4 wieder in die Ausgangsposition bringt. Selbstverständlich kann die Rückdruckfeder 6 durch eine pneumatische Funktion ersetzt werden, so dass der Auswurf des Preforms 2 zu einem beliebig späteren Zeitpunkt über die Prägeelemente 5 stattfinden kann. Dies ist vor allem entscheidend, wenn der Preform zur weiteren Nachkühlung in der Kühlhülse 8 mit Kontaktkühlung verbleiben soll. Bei einem Preform ohne Stützring 3 können die Prägeelemente 5 in jedem Fall entspannt werden, da der Preform in diesem Fall nicht axial bewegt wird.

## Patentansprüche

1. Verfahren zur Herstellung von Preformen (2) mit verbesserter Halsgeometrie unterhalb des Gewindebereiches bzw. des Transportringes (3) für den vereinfachten, nachfolgenden Blasprozess, wobei der fertig hergestellte Preform (2) aus mindestens einem thermoplastischen Material eine wesentlich dünnere Wandstärke im Halsbereich unterhalb des Gewindes als im Gewinde selbst aufweist, und der Preform (2) zur Umformung in blasgeformte Behälter vorgesehen ist, wobei dieser Preform (2) spritzgegossen ist, aber trotz dünnwandiger Bereiche der Nachdruck mittels mindestens zweier Kanäle (14), die eine erhöhter Wandstärke aufweisen, aufrecht erhalten werden kann, wobei mindestens zwei Kanäle (14) am Umfang des beschriebenen Preformbereiches erzeugt werden, **dadurch gekennzeichnet, dass** um mit der herkömmlichen Spritzgießtechnik dennoch einen Preform produzieren zu können, das Formwerkzeug (17) derart gestaltet wird, dass über die dünne Wandung (9) unterhalb des Proformhalses (15) zwei oder drei Kanäle (14) von ausreichender Breite vorgesehen werden, die die Aufrechterhaltung des Nachdrucks im Halsbereich (15) gewährleisten.

2. Verfahren nach Anspruch 1, **dadurch gekennzeichnet, dass** die Preformen (2) bei deren Herstellung im dünnwandigen Bereich unterhalb des Halses alle mindestens zwei Stege bzw. Kanäle (14) verfahrensbedingt aufweisen.

3. Verfahren nach Anspruch 1 und 2, **dadurch gekennzeichnet, dass** die Kanäle (14) für die Spritzgiesslösung so gestaltet sind, dass zum Erhalt des Nachdrucks der Kunststoff darin nicht schneller einfriert als der Kunststoff im gesamten Preformhals.

4. Vorrichtung zur Herstellung eines Preforms (2) mit einer für den Blasprozess optimierten Geometrie unterhalb des Halses, wobei der fertig hergestellte Preform (2) im Bereich unterhalb des Gewindes eine deutlich dünnere Wandstärke als im Gewinde selbst aufweist, wobei eine Spritzgiessvorrichtung Kunststoffrohware plastifiziert um diese plastische Masse in die Kavitäten eines geschlossenen Formwerkzeuges unter Druck einzubringen, ein Formwerkzeug mit einem oder mehreren Formkavitäten für die fertige Formgebung dieser Preformen (2) verantwortlich ist, das über spezielle Kanäle (14) verfügt um den Bedarf des Nachdrucks im Hals trotz der verringerten Wandstärke zu gewährleisten, wobei mindestens zwei Kanäle (14) am Umfang des beschriebenen Preformbereichs erzeugt werden, **dadurch gekennzeichnet, dass** um mit der herkommlichen Spritzgießtechnik dennoch einen Preform produzieren zu können, das Formwerkzeug (17) derart gestaltet wird, dass über die dünne Wandung (9) unterhalb des Preformhalses (15) zwei oder drei Kanäle (14) von ausreichender Breite vorgesehen werden, die die Aufrechterhaltung des Nachdrucks im Halsbereich (15) gewährleiten.

## Claims

1. Method for the production of preforms (2) with an improved neck geometry beneath the threaded region or the transporting ring (3) for the simplified subsequent blow-moulding process, wherein the definitively produced preform (2) made of at least one thermoplastic material has a significantly thinner wall thickness in the neck region beneath the thread than in the thread itself, and the preform (2) is provided in order to be formed into blow-moulded containers, wherein said preform (2) is injection moulded but, despite thin-walled regions, the holding pressure can be maintained by means of at least two channels (14) with an increased wall thickness, wherein at least two channels (14) are produced on the circumference of the preform region described, **characterized in that**, in order for it to be possible, however, for a preform to be produced by conventional injection moulding, the mould (17) is configured such that two or three channels (14) of sufficient width are provided over the thin wall (9) beneath the preform neck (15), said channels ensuring that the holding pressure in the neck region (15) is maintained.

2. Method according to Claim 1, **characterized in that** the method provides all of the preforms (2), as they are being produced, with at least two ribs or channels (14) in the thin-walled region beneath the neck.

3. Method according to Claims 1 and 2, **characterized in that** the channels (14) for the injection-moulding solution are configured such that, in order for the holding pressure to be maintained, the polymer material in said channels does not freeze any more quickly than the polymer material in the preform neck.

4. Apparatus for the production of a preform (2) with a geometry beneath the neck which is optimized for the blow-moulding process, wherein the definitively produced preform (2) has a considerably thinner wall thickness in the region beneath the thread than in the thread itself, wherein an injection-moulding apparatus plasticizes raw polymer material in order to introduce this plastic substance into the cavities of a closed mould under pressure, a mould with one or more mould cavities is responsible for the definitive shaping of said preforms (2), and has special channels (14), in order to ensure that the required holding pressure is maintained in the neck despite the reduced wall thickness, wherein at least two channels (14) are produced on the circumference of the preform region described, **characterized in that**, in order for it to be possible, however, for a preform to be produced by conventional injection moulding, the mould (17) is configured such that two or three channels (14) of sufficient width are provided over the thin wall (9) beneath the preform neck (15), said channels ensuring that the holding pressure in the neck region (15) is maintained.

## Revendications

1. Procédé de fabrication de préformes (2) ayant une géométrie de col améliorée en dessous de la région de filetage ou de l'anneau de transport (3) pour un processus de soufflage subséquent simplifié, la préforme fabriquée de manière définitive (2), constituée d'au moins un matériau thermoplastique, présentant une épaisseur de paroi dans la région du col en dessous du filetage sensiblement plus mince qu'au niveau du filetage proprement dit, et la préforme (2) étant prévue pour être mise en forme de récipients formés par soufflage, cette préforme (2) étant moulée par injection, mais malgré des régions à parois minces, la pression de maintien pouvant être maintenue au moyen d'au moins deux canaux (14) qui présentent une épaisseur de paroi accrue, au moins deux canaux (14) étant réalisés au niveau de la périphérie de la région de préforme décrite, **caractérisé en ce que** pour pouvoir toutefois produire une préforme avec la technique de moulage par injection usuelle, l'outil de moulage (17) est configuré de telle sorte que deux ou trois canaux (14) de largeur suffisante soient prévus au-dessus de la paroi mince (9) en dessous du col de la préforme (15), lesquels garantissent le maintien de la pression de maintien dans la région du col (15).

2. Procédé selon la revendication 1, **caractérisé en ce que** les préformes (2), lors de leur fabrication, présentent toutes, du fait du procédé, au moins deux nervures ou canaux (14) dans la région à paroi mince en dessous du col.

3. Procédé selon les revendications 1 et 2, **caractérisé en ce que** les canaux (14) sont configurés pour la solution de moulage par injection de telle sorte que pour obtenir la pression de maintien, le plastique qu'ils contiennent ne se fige pas plus rapidement que le plastique dans le col de la préforme.

4. Dispositif de fabrication d'une préforme (2) ayant une géométrie en dessous du col optimisée pour le processus de soufflage, la préforme fabriquée de manière définitive (2) présentant dans la région en dessous du filetage une épaisseur de paroi nettement plus mince que dans le filetage lui-même, un dispositif de moulage par injection plastifiant des matières plastiques brutes afin d'introduire sous pression cette masse plastique dans les cavités d'un outil de moulage fermé, un outil de moulage comprenant une ou plusieurs cavités de moule étant responsable de la forme définitive de ces préformes (2), lequel outil de moulage dispose de canaux spéciaux (14) afin de garantir, malgré l'épaisseur de paroi réduite, le besoin en pression de maintien dans le col, au moins deux canaux (14) étant réalisés au niveau de la périphérie de la région de préforme décrite, **caractérisé en ce qu'**afin de pouvoir toutefois produire une préforme avec la technique de moulage par injection usuelle, l'outil de moulage (17) est configuré de telle sorte que deux ou trois canaux (14) de largeur suffisante soient prévus au-dessus de la paroi mince (9) en dessous du col de la préforme (15), lesquels garantissent le maintien de la pression de maintien dans la région du col (15) .
